# EUROPÄISCHE PATENTSCHRIFT

(11) **EP 0 818 487 B1**
(45) Veröffentlichungstag und Bekanntmachung des Hinweises auf die Patenterteilung: **18.02.2004**
(21) Anmeldenummer: 97109915.5
(22) Anmeldetag: 18.06.1997
(51) Int. Cl.: C08G 63/685, C08G 63/91, C09D 167/00

(54) **Beta-hydroxyalkylamidgruppenhaltige Polyester, ihre Herstellung und ihre Verwendung**
Polyesters containing beta- hydroxyalkylamide groups, their preparation and their use
Polyesters contenant des groupes beta-hydroxyalkylamide, leur préparation et leur utilisation

(30) Priorität: 12.07.1996 DE 19628262; 03.02.1997 DE 19703952
(43) Veröffentlichungstag der Anmeldung: 14.01.1998
(73) Patentinhaber: EMS-INVENTA AG, 8002 Zürich (CH)
(72) Erfinder: Kaplan, Andreas, Dr.rer.nat., 7000 Chur (CH); Gisler, René, 7000 Chur (CH); Kinkelin, Eberhard, Dr.rer.nat., 7000 Chur (CH)
(74) Vertreter: Pfenning, Meinig & Partner

(56) Entgegenhaltungen:
- US-A- 3 709 858
- US-A- 4 048 252
- US-A- 4 076 917
- US-A- 4 101 606

## Beschreibung

Die vorliegende Erfindung betrifft β-hydroxyalkylamidgruppenhaltige amorphe und/oder semikristalline Copolyester, ein Verfahren zu ihrer Herstellung und deren Verwendung als Vernetzerkomponente in Pulverlacken sowie in lösemittelhaltigen und wasserverdünnbaren Lacken.

Die US 4,076,917 beschreibt β-Hydroxyalkylamide als Vernetzer für carboxylfunktionelle Polyacrylate in lösemittelhaltigen Lacken und wäßrigen Emulsionen sowie Pulverlacken. Die dort beschriebenen monomeren β-Hydroxyalkylamide werden erhalten aus den Alkylestern von gesättigten oder ungesättigten Dicarbonsäuren durch Umsetzung mit Aminoalkoholen.

Die US 4,801,680 beschreibt Pulverlacke, die als Bindemittel β-Hydroxyalkylamide und carboxylfunktionelle Copolyester enthalten. Die dort beschriebenen monomeren β-Hydroxyalkylamide werden ebenfalls erhalten aus den Alkylestern von gesättigten oder ungesättigten Dicarbonsäuren durch Umsetzung mit Aminoalkoholen.

Die US 4,101,606 beschreibt β-Hydroxyalkylamidpolymere als Vernetzer für Polymere mit Carboxyl- oder Anhydridfunktion in lösemittelhaltigen Lacken und wäßrigen Emulsionen sowie Pulverlacken. Diese β-Hydroxyalkylamidpolymeren sind Polyacrylate mit β-Hydroxyalkylamidgruppen, die durch radikalische Copolymerisation aus β-Hydroxyalkylamiden mit einer Vinylgruppe und weiteren ungesättigten Verbindungen erhalten werden.

Amorphe und/oder semikristalline Copolyester mit β-Hydroxyalkylamidgruppen sind bisher noch nicht bekannt.

Ausgehend hiervon ist es die Aufgabe der vorliegenden Erfindung, geeignete β-hydroxyalkylamidgruppenhaltige Polyester und ein Verfahren zu deren Herstellung vorzuschlagen.

Die Aufgabe wird durch die kennzeichnenden Merkmale des Anspruches 1 gelöst, das Verfahren zur Herstellung durch die Merkmale des Anspruches 2. Die Unteransprüche zeigen vorteilhafte Weiterbildungen auf.

Die erfindungsgemäßen β-hydroxyalkylamidgruppenhaltigen amorphen und/oder semikristallinen Copolyester entsprechen der Formel (I). 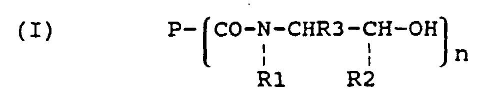 wobei
- P =: Polymerkette des Polyesters
- R1 =: Alkylreste mit 1-5 C-Atomen oder
Wasserstoff oder

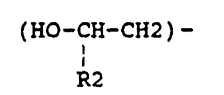

- R2: = Alkylreste mit 1-5 C-Atomen oder
Wasserstoff
- R3: = Alkylreste mit 1-5 C-Atomen oder
Wasserstoff, und
- n ≥: 2, bevorzugt 2-100
ist, mit einem Molekulargewicht (Mn) von 300 bis 15'000 und einer Hydroxylzahl von 10 bis 400 [mg KOH/g].

Überraschenderweise zeigte sich, daß auch β-hydroxyalkylamidgruppenhaltige amorphe und/oder semikristalline Copolyester sich als Vernetzer für carboxylund/oder anhydridfunktionelle sowie für isocaynathaltige Verbindungen in Pulverlacken sowie in lösemittelhaltigen und in wasserverdünnbaren Lacken vorzüglich eignen.

Die erfindungsgemäßen β-hydroxyalkylamidgruppenhaltigen amorphen und/oder semikristallinen Copolyester erhält man entweder durch die Umsetzung von carboxylfunktionellen amorphen und/oder semikristallinen Copolyestern mit Aminoalkoholen in der Schmelze oder in Lösemitteln bei Temperaturen von 80 °C bis 260 °C und gegebenenfalls in Gegenwart von geeigneten Katalysatoren oder bevorzugt durch die Umsetzung von amorphen und/oder semikristallinen alkylestergruppenhaltigen Copolyestern mit Aminoalkoholen, wobei die Umsetzung entweder in der Schmelze oder in geeigneten Lösemitteln bei Temperaturen von 80 °C bis 260 °C, gegebenenfalls in Gegenwart von geeigneten Katalysatoren, erfolgt. Bevorzugte Alkylestergruppen sind Methylestergruppen. Als Katalysatoren seien beispielhaft genannt: Natrium- oder Kaliummethylat, Kaliumtertiärbutylat usw.; quartanäre Ammoniumalkoholate, wie z.B. Tetraammoniummethylat usw.; Alkalimetalle; Alkalihydroxide, wie z.B. Natrium- oder Kaliumhydroxid und Ammoniumhydroxide.

Beispielhaft für Aminoalkohole seien genannt: 2-Aminoethanol, 2-Methylaminoethanol, 2-Ethylaminoethanol, 2-n-Propylaminoethanol, 2,2'-Iminodiethanol, 2-Aminopropanol, 2,2'-Iminodiisopropanol, 2-Aminocyclohexanol, 2-Aminocyclopentanol, 2-Aminomethyl-2-methylethanol 2-n-Butylaminoethanol, 2-Methylamino-1,2-dimethylethanol, 2-Amino-2-methyl-1-propanol, 2-Amino-2-methyl-1,3-propandiol, 2-Amino-2-ethyl-1,3-propandiol, 2-Amino-2-hydroxymethyl-1,3-propandiol und 1-Amino-2-propanol.

Die alkylestergruppenhaltigen amorphen und/oder semikristallinen Copolyester erhält man entweder durch die bekannten Umesterungsverfahren aus den Alkylestern von di- oder polyfunktionellen Carbonsäuren mit di- oder polyfunktionellen Alkoholen in der Schmelze oder in Lösemitteln bei Temperaturen von 80 °C bis 260 °C in Gegenwart von geeigneten Katalysatoren, wie z.B. Titantetrabutylat, oder durch eine polymeranaloge Umsetzung von hydroxylfunktionellen amorphen und/oder semikristallinen Copolyestern mit den Alkylestern von Di- oder Polycarbonsäuren in der Schmelze oder in geeigneten Lösemitteln bei Temperaturen von 80 °C bis 260 °C in Gegenwart von geeigneten Katalysatoren.

Bevorzugte Alkylester von Polycarbonsäuren sind Dimethylterephthalat und Dimethyladipat. Als Katalysatoren eignen sich die üblichen sauren oder basischen Umesterungskatalysatoren, wie z.B. Titantetrabutylat oder Natriummethylat.

Die amorphen und/oder semikristallinen hydroxyfunktionellen Copolyester können nach den für Polyester bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenenfalls verwendet werden.

Geeignete amorphe hydroxylfunktionelle Copolyesterharze besitzen eine Hydroxylzahl von 10 - 200 [mg KOH/g] und eine Glasübergangstemperatur von > 10 °C. Amorphe hydroxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, Epsilon-Caprolacton oder Hydroxypivalinsäureester des Neopentylglykols können ebenfalls verwendet werden. In geringen Mengen kommen auch Monocarbonsäuren, wie z.B. Benzoesäure, Tertiärbutylbenzoesäure, Hexahydrobenzoesäure und gesättigte aliphatische Monocarbonsäuren zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexyl)]propan, 1,4-Dimethylolcyclohexan, Diethylenglykol, Dipropylenglykol und 2,2-Bis-[4-(2-hydroxy)]phenylpropan. In geringen Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat. Auch Epoxverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Geeignete semikristalline Polyester besitzen eine Hydroxylzahl von 10 - 400 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen, und aliphatischen und/oder cycloaliphatischen und/oder aromatischen mehrbasischen Carbonsäuren, bevorzugt zweibasische Säuren. Beispielhaft seien als aliphatische Polyole genannt: Ethylenglykol(1,2-Ethandiol), Propylenglykol(1,3-Propandiol), Butylenglykol(1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.

Geeignete mehrbasische Carbonsäuren sind aliphatische Dicarbonsäuren, bevorzugt C4-C20-Dicarbonsäuren, wie z.B. Adipinsäure, Azelainsäure, Sebazinsäure, Dodecandicarbonsäure, Bernsteinsäure, Undecandicarbonsäure, und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasischen Carbonsäuren verwendet werden.

Als Härtungsmittel für diese β-hydroxylalkylamidhaltigen amorphen und/oder semikristallinen Copolyester in thermohärtenden Lacken können aliphatische mehrbasische Säuren, bevorzugt zweibasische Säuren, wie z.B. Adipinsäure, Pimelinsäure, Suberinsäure, Azelainsäure, Sebacinsäure, Malonsäure, Bersteinsäure, Glutarsäure, 1,12-Dodecandisäure, usw. verwendet werden. Die Anhydride dieser Säuren können ebenfalls verwendet werden, z.B. Glutarsäureanhydrid, Bernsteinsäure-anhydrid, sowie die Polyanhydride dieser Dicarbonsäuren. Diese Polyanhydride werden durch intermolekulare Kondensation der genannten aliphatischen zweibasischen Dicarbonsäuren erhalten.

Beispiele sind Adipinsäure(poly)anhydrid, Azelainsäure-(poly)anhydrid, Sebacinsäure(poly)anhydrid, Dodecandisäure(poly)anhydrid usw. Die Polyanhydride haben ein Molekulargewicht (Gewichtsmittel bezogen auf Polystyrolstandard) von 1000 - 5000. Die Polyanhydride können auch mit Polyol modifiziert werden.

Die Polyanhydride können auch im Gemisch mit den aliphatischen zweibasischen Dicarbonsäuren als Härtungsmittel eingesetzt werden oder im Gemisch mit Hydroxycarbonsäuren, die Schmelzpunkte zwischen 40 und 150 °C besitzen, z.B. 12-Hydroxy-Stearinsäure, 2- bzw. 3- bzw. 10-Hydroxyoctadecansäure, 2-Hydroxymyristinsäure.

Auch cycloaliphatische Dicarbonsäuren, wie z.B. 1,4-Cyclohexandicarbonsäure oder deren Polyanhydride können als Härtungsmittel verwendet werden.

Geeignete Härtungsmittel sind auch amorphe und semikristalline Copolyester.

Sowohl die amorphen, als auch die semikristallinen Copolyester können nach den für Polyestern bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenenfalls verwendet werden.

Geeignete amorphe carboxylfunktionelle Copolyesterharze besitzen eine Säurezahl von 10 - 200 [mg KOH/g] und eine Glasübergangstemperatur von > 10 °C. Amorphe carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder Isphthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, Epsilon-Caprolacton oder Hydroxypivalinsäureester des Neopentylglykols, können ebenfalls verwendet werden.

In geringen Mengen kommen auch Monocarbonsäuren, wie z.B. Benzoesäure, Tertiärbutylbenzoesäure, Hexahydrobenzoesäure und gesättigte aliphatische Monocarbonsäuren, zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethylpropandiol-1,3(Neopentylglykol), 2,5-Hexandiol, 1,6-Hexandiol, 2,2-[Bis-(4-hydroxycyclohexyl)]propan, 1,4-Dimethylolcyclohexan, Diethylenglykol, Dipropylenglykol und 2,2-Bis-[4-(2-hydroxy)]phenylpropan. In geringen Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat. Auch Epoxverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Geeignete semikristalline Polyester besitzen eine Säurezahl von 10 - 400 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen, und aliphatische und/oder cycloaliphatischen und/oder aromatischen mehrbasischen Carbonsäuren, bevorzugt zweibasische Säuren. Beispielhaft seien als aliphatische Polyole genannt: Ethylenglykol(1,2-Ethandiol), Propylenglykol(1,3-Propandiol), Butylenglykol(1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.

Geeignete mehrbasische Carbonsäuren sind aliphatische Dicarbonsäuren, bevorzugt C4-C20-Dicarbonsäuren, wie z.B. Adipinsäure, Azelainsäure, Sebazinsäure, Dodecandicarbonsäure, Bernsteinsäure, Undecandicarbonsäure, und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasischen Carbonsäuren verwendet werden.

Geeignete carboxylfunktionelle Acrylatpolymere besitzen eine Säurezahl von 10 - 300 [mg KOH/g], hergestellt durch Copolymerisation eines Monomerengemisches, bestehend aus,
a) 0 bis 70 Gew.Teilen Methyl(meth)acrylat,
b) 0 bis 60 Gew.Teilen (Cyclo)Alkylestern der Acryl- und/oder Methacrylsäure mit 2 bis 18 Kohlenstoffresten im Alkyl- bzw. im Cycloalkylrest,
c) 0 bis 90 Gew.Teilen Vinylaromaten
d) 0 bis 60 Gew.Teilen olefinisch ungesättigten Carbonsäuren,
wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(methyl)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat.

Als Monomere c) kommen z.B. Styrol, Vinyltoluol und α-Ethylstyrol in Betracht.

Beispiele für d) sind Acryl- und Methacrylsäure, die auch bevorzugt eingesetzt werden, wie auch Crotonsäure, Itaconsäure Fumarsäure, Maleinsäure und Citraconsäure.

Die Herstellung der Copolymerisate kann durch Copolymerisation der beispielhaft genannten Monomere a) bis d) nach üblichen radikalischen Polymerisationsverfahren erfolgen, wie beispielsweise Lösungs-, Emulsions-, Perl- oder Substanzpolymerisation. Dabei werden die Monomeren bei Temperaturen von 60 bis 160 °C, vorzugsweise 80 bis 150 °C, in Gegenwart von Radikalbildnern und gegebenenfalls Molekulargewichtsreglern copolymerisiert.

Die Herstellung der carboxylfunktionellen AcrylatCopolymerisate erfolgt in inerten Lösungsmitteln. Geeignete Lösungsmittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise werden in einen Polymerisationsreaktor gleichmäßig und kontinuierlich die Monomermischung und der Initiator eindosiert, und gleichzeitig wird die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 25 bar druchgeführt werden. Die Initiatoren werden in Mengen von 0.05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azobis-1-cyclohexannitril und 2,2'-Azo-bis-isobuttersäurealkylester; symmetrische Diacylperoxide, wie z.B.Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0.1 bis 10 Gew.-% bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder oder Sprühtrockner bei ca. 120 bis 160 °C und einem Vakuum von 100 bis 300 mbar entfernt und die erfindungsgemäß zu verwendenden Copolymerisate gewonnen werden.

Auch Gemische verschiedener geeigneter Härter können verwendet werden.

Das Äquivalentverhältnis von β-Hydroxyalkylamid zu Carbonsäureäquivalenten liegt im Bereich von 0.6 bis 1.6:1.

Natürlich beschränkt sich die Wahl des Härtungsmittels nicht auf carboxyl- und anhydridfunktionelle Verbindungen. Mögliche Härter sind alle Verbindungen, die mit der Hydroxylgruppe der β-hydroxyalkylamidgruppenhaltigen amorphen und/oder semikristallinen Copolyester reagieren, wie z.B. isocyanathaltige Verbindungen. Beispielhaft für isocaynathaltige Verbindungen sei Isophorondiisocyanurat und dessen Derivate genannt.

Für die Herstellung von Pulverlacken können die üblichen Pigmente und/oder Füllstoffe und/oder Additive verwendet werden.

Dabei handelt es sich um Additive aus der Gruppe Beschleuniger, Verlauf- und Entgasungsmittel, Hitze, UV- und/oder HALS-Stabilisatoren und/oder Triboadditive sowie erforderlicherweise um Mattierungsmittel, wie z.B. Wachse.

Die Herstellung von Pulverlacken erfolgt vorzugsweise in der Schmelze durch gemeinsame Extrusion sämtlicher Formulierungsbestandteile bei Temperaturen zwischen 60 bis 140 °C. Das Extrudat wird anschließend abgekühlt, gemahlen und auf eine Korngröße kleiner als 90 µm abgesiebt. Grundsätzlich sind auch andere Verfahren zur Herstellung der Pulverlacke geeignet, wie z.B. Vermischen der Formulierungsbestandteile in Lösung und anschließende Ausfällung oder destillative Entfernung der Lösemittel.

Die Applikation der erfindungsgemäßen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Für die Verwendung als lösemittelhaltige Lacke werden β-hydroxyalkylamidgruppenhaltigen amorphen und/oder semikristallinen Copolyester, die geeigneten Härtungsmittel und die üblichen Pigmente und Additive in geeigneten Lösemittel gelöst. Die Herstellung erfolgt nach den für lösemittelhaltigen Lacken üblichen Verfahren.

Lösemittel beinhalten Aromaten, wie z.B. Toluol, Xylol usw.; Aliphaten, wie z.B. Heptan, Oktan usw.; Wasser, Dimethylformamid, Dimethylsulfoxid, auch halogenhaltige Lösemittel, Ether, Ester und Alkohole, je nach Löslichkeit der Formulierungskomponenten.

Wasserverdünnbare Lacke werden aus Salzen der carboxylfunktionellen Härtungsmittel, wie z.B. Aminsalze, wie z.B. Dimethylaminoethanol, Trimethylamin, Triethylamin, Diethanolamin, Methylethanolamin oder Ammoniumsalzen usw., gegebenenfalls mit anderen geeigneten Härtungsmitteln und den β-hydroxyalkylamidgruppenhaltigen amorphen und/oder semikristallinen Copolyester hergestellt nach den üblichen Verfahren mit den gebräuchlichen Pigmenten und Additiven.

Die Herstellung und die Eigenschaften der erfindungsgemäßen β-hydroxyalkylamidgruppenhaltigen amorphen und/oder semikristallinen Copolyester werden nachfolgend beispielhaft dargestellt.

### Herstellung der β-hydroxyalkylamidgruppenhaltigen Copolyester

### Beispiel 1

In einem 2 - Veresterungsreaktor, versehen mit Temperaturfühler, Rührer, Rückflußkolonne und Destillationsbrücke werden 501.8 g (4.82 Mol) Neopentylglykol vorgelegt und bei 140 °C unter einer während der ganzen Reaktion aufrechtgehaltenen Stickstoffatmosphäre aufgeschmolzen. Unter Rühren werden dann 533.3 g (3.21 Mol) Isophthalsäure, 138.2 g (0.80 Mol) Cyclohexandicarbonsäure und 0.6 g Veresterungskatalysator zugegeben. Nach schrittweiser Erhöhung der Innentemperatur bis auf 235 °C wird die Reaktion solange fortgesetzt, bis kein Destillat mehr entsteht. Unter Vakuum von 20 mbar wird bis zum Erreichen einer Schmelzviskosität von ca. 15 Pa*s bei 160 °C kondensiert. Nach Beschleierung mit Stickstoff gibt man 0.6 g Umesterungskatalysator und 186.39 g (1.07 Mol) Dimethyl-adipat zu. Unter Vakuum von 100 mbar wird die Reaktion solange fortgesetzt, bis kein Methanol mehr entsteht. Nach erneuter Beschleierung mit Stickstoff gibt man 80.37 g (1.07 Mol) 1-Amino-2-propanol zu. Unter Vakuum von 100 mbar wird die Reaktion solange fortgesetzt, bis kein Methanol mehr entsteht.

Der erhaltene Polyester hat eine Säurezahl von < 2 mg KOH/g, eine Hydroxylzahl von 60 mg KOH/g und eine ICI-Schmelzviskosität bei 160 °C von 14 Pa*s.

Das Molekulargewicht, berechnet als Zahlenmittel aus der Endgruppenkonzentration, beläuft sich auf ca. 1700.

### Beispiel 2

In einer zu Beispiel 1 analogen Versuchsapparatur werden 533.1 g (4.51 Mol) Hexandiol vorgelegt und bei 140 °C unter einer während der ganzen Reaktion aufrechtgehaltenen Stickstoffatmosphäre aufgeschmolzen. Unter Rühren werden dann 629.3 g (2.73 Mol) Dodecandisäure und 0.6 g Veresterungskatalysator zugegeben. Nach schrittweiser Erhöhung der Innentemperatur bis auf 235 °C wird die Reaktion solange fortgesetzt, bis kein Destillat mehr entsteht.

Nach Beschleierung mit Stickstoff gibt man 0.6 g Umesterungskatalysator und 620.15 g (3.56 Mol) Dimethyladipat zu. Unter Vakuum von 100 mbar wird die Reaktion solange fortgesetzt, bis kein Methanol mehr entsteht. Nach erneuter Beschleierung mit Stickstoff gibt man 217.45 g (3.56 Mol) 2-Aminoethanol zu. Unter Vakuum von 100 mbar wird die Reaktion solange fortgesetzt, bis kein Methanol mehr entsteht. Der erhaltene Polyester hat eine Säurezahl von < 2 mg KOH/g, eine Hydroxylzahl von 199 mg KOH/g und eine ICI-Schmelzviskosität bei 160 °C von 2 Pa*s.

Das Molekulargewicht, berechnet als Zahlenmittel aus der Endgruppenkonzentration, beläuft sich auf ca. 550.

### Herstellung eines carboxylfunktionellen Copolyesters

### Beispiel 3

In einem 2 l-Veresterungsreaktor, versehen mit Temperaturfühler, Rührer, Rückflußkolonne und Destillationsbrücke werden 400.3 g (3.84 Mol) Neopentylglykol und 19.2 g (0.31 Mol) Ethylenglykol vorgelegt und bei 140 °C unter einer während der ganzen Reaktion aufrechtgehaltenen Stickstoffatmosphäre aufgeschmolzen. Unter Rühren werden dann 557.4 g (3.36 Mol) Terephthalsäure, 58.7 g (0.35 Mol) Isophthalsäure und 0.6 g Veresterungskatalysator zugegeben. Nach schrittweiser Erhöhung der Innentemperatur wird die Reaktion solange fortgesetzt, bis kein Destillat mehr entsteht. Anschließend werden 88.0 g (0.53 Mol) Isophthalsäure und 25.8 g (0.18 Mol) Adipinsäure zugegeben und solange verestert, bis der gewünschte Säurezahlbereich von 30 bis 36 mg KOH/g erreicht ist. Ein Teil dieser zweiten Stufe wird eventuell unter vermindertem Druck (< 100 mbar) durchgeführt.

Der erhaltene Polyester hat eine Säurezahl von 33 mg KOH/g und eine ICI-Schmelzviskosität bei 160 °C von 40 Pa*s.

Das Molekulargewicht, berechnet als Zahlenmittel aus der Endgruppenkonzentration, beläuft sich auf ca. 2800.

### Herstellung der thermohärtenden Lacke

### Beispiel 4

346.5 g des β-hydroxyalkylamidgruppenhaltigen Copolyesters aus Beispiel 1, 643.5 g des carboxylfunktionellen Copolyesters aus Beispiel 3, 8 g Resiflow PV 88 (Verlaufmittel auf Polyacrylat-Basis, Handelsprodukt der Fa. Worleè-Chemie GmbH) und 2 g Benzoin werden in einem Henschelmischer bei 700 Upm während 30 sek trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona oder Tribo) auf Aluminiumbleche (Q-panel AL-36 505 H 14/08 (0.8 mm)) appliziert und bei einer Einbrenntemperatur von 200 °C und einer Einbrennzeit von 15 min ausgehärtet. Die Schichtdicke beträgt 60 µm.

Tabelle 1 zeigt die lacktechnischen Eigenschaften.

### Beispiel 5

### Härtekomponente

| | |
|---|---|
| | |
| β-Hydroxyalkylamidgruppenhaltiger Copolyester aus Beispiel 2 | 75 g |
| Benzoin | 2 g |
| Dimethylsulfoxid | 100 g |

### Harzkomponente

| | |
|---|---|
| Carboxylfunktioneller Copolyester aus Beispiel 3 | 425 g |
| Resiflow PV 88 (Verlaufmittel auf Polyacrylat-Basis, Handelsprodukt der Fa. Worleè-Chemie GmbH) | 8 g |
| Propylenglykolmonomethylether | 200 g |
| Xylol | 190 g |

In einem 3 Liter Rührgefäß werden die Härtekomponente und die Harzkomponente separat bei 60 °C gelöst und kurz vor der Applikation vermischt.

Anschließend wird mit einem Filmaufzugsgerät ein Film von 200 µm auf Aluminiumbleche (Q-panel AL-36 5005 H 14/08 (0.8 mm)) aufgetragen und bei einer Einbrenntemperatur von 200 °C und einer Einbrennzeit von 15 min ausgehärtet. Die Schichtdicke beträgt 55 µm.

Tabelle 1 zeigt die lacktechnischen Eigenschaften.

### Beispiel 6

### Härtekomponente

| | |
|---|---|
| β-Hydroxyalkylamidgruppenhaltiger Copolyester aus Beispiel 2 | 75 g |
| Benzoin | 2 g |
| Dimethylformamid | 23 g |
| Wasser | 100 g |

### Harzkomponente

| | |
|---|---|
| Carboxylfunktioneller Copolyester aus Beispiel 3 | 425 g |
| 2-Methylaminoethanol | 19 g |
| Resiflow PV 88 (Verlaufmittel auf Polyacrylat-Basis, Handelsprodukt der Fa. Worleè-Chemie GmbH) | 8 g |
| Butyl Cellosolve | 48 g |
| Wasser | 200 g |

In einer 3 Liter Rührgefäß werden die Härtekomoponente und die Harzkomponente separt bei 60 °C gelöst und kurz vor der Applikation vermischt.

Anschließend wird mit einem Filmaufzugsgerät ein Film von 200 µm auf Aluminiumbleche (Q-panel AL-36 5005 H 14/08 (0.8 mm)) aufgetragen und bei einer Einbrenntemperatur von 200 °C und einer Einbrennzeit von 15 min ausgehärtet. Die Schichtdicke beträgt 55 µm.

Tabelle 1 zeigt die lacktechnischen Eigenschaften.

**Tabelle 1**

| | Beispl. 4 | Beispl. 5 | Beispl. 6 |
|---|---|---|---|
| Glanz (60° DIN 67530) | 105 | 104 | 103 |
| Verlauf | sehr gut | sehr gut | sehr gut |
| Erichsentiefung (DIN 53156) | 10 | 10 | 10 |
| Gitterschnitt (DIN 52151) | 0 | 0 | 0 |
| Impact (ASTM D 2794, rückseitig) | > 160 | > 160 | >160 |

## Patentansprüche

1. Vernetzer für carboxyl- und/oder anhydridfunktionelle und isocyanathaltige Verbindungen in Pulverlacken, lösemittelhaltigen und wasserverdünnbaren Lacken,
**dadurch gekennzeichnet, daß**
der Vernetzer β-hydroxyalkylamidgruppenhaltiger amorpher und/oder semikristalliner Copolyester nach Formel (I) 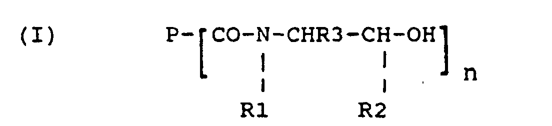 wobei
P = Polymerkette des Polyesters
R1 = Alkylreste mit 1-5 C-Atomen oder
Wasserstoff oder 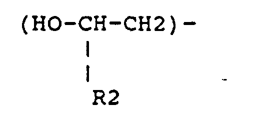
R2 = Alkylreste mit 1-5 C-Atomen oder
Wasserstoff, ,
R3 = Alkylreste und 1-5 C-Atome oder
Wasserstoff, und
n ≥ 2
ist, mit einem Molekulargewicht (Mn) von 300 bis 15'000 und einer Hydroxylzahl von 10 bis 400 [mg KOH/g].

2. Verfahren zur Herstellung der Vernetzer nach Anspruch 1, **dadurch gekennzeichnet, daß** in einer ersten Stufe ein hydroxylfunktioneller amorpher und/oder semikristalliner Copolyester mit einem Dialkylester einer Polycarbonsäure in Gegenwart eines Umesterungskatalysators zu einem alkylestergruppenhaltigen amorphen und/oder semikristallinen Copolyester umgesetzt wird und in einer zweiten Stufe der alkylestergruppenhaltige amorphe und/oder semikristalline Copolyester mit einem Aminoalkohol zu den entsprechenden β-hydroxyalkylamidgruppenhaltigen amorphen und/oder semikristallinen Copolyestern umgesetzt wird.

3. Verfahren nach Anspruch 2, **dadurch gekennzeichnet, daß** die Hydroxylzahl der amorphen hydroxylfunktionellen Copolyester zwischen 10 und 200 [mg KOH/g] liegt und die Glasumwandlungstemperatur > 10 °C ist.

4. Verfahren nach Anspruch 2, **dadurch gekennzeichnet, daß** die Hydroxylzahl der semikristallinen hydroxylfunktionellen Copolyester zwischen 10 und 400 [mg KOH/g] liegt.

5. Verfahren nach Anspruch 2, **dadurch gekennzeichnet, daß** die Aminoalkohole ausgewählt sind aus der Gruppe 2-Aminoethanol, 2-Methylaminoethanol, 2-Ethylaminoethanol, 2-n-Propylaminoethanol, 2,2'-Iminodiethanol, 2-Aminopropanol, 2,2'-Iminodiisopropanol, 2-Aminocyclohexanol, 2-Aminocyclopentanol, 2-Aminomethyl 2-methylethanol 2-n-Butylaminoethanol, 2-Methylamino-1,2-dimethylethanol, 2-Amino-2-methyl-1-propanol, 2-Amino-2-methyl-1,3-propandiol, 2-Amino-2-ethyl-1,3-propandiol, 2-Amino-2-hydroxymethyl-1,3-propandiol und 1-Amino-2-propanol.

6. Verfahren nach Anspruch 2, **dadurch gekennzeichnet, daß** die Umsetzung der alkylestergruppenhaltigen amorphen und/oder semikristallinen Copolyester mit einem Aminoalkohol in Gegenwart von Katalysatoren ausgewählt aus der Gruppe Natriumoder Kaliummethylat, Kaliumtertiärbutylat, quartanäre Ammoniumalkoholate, Alkalimetalle, Alkalihydroxide, oder Ammoniumhydroxide durchgeführt wird.

7. Verfahren nach Anspruch 2, **dadurch gekennzeichnet, daß** die hydroxylfunktionellen amorphen und/oder semikristallinen Copolyester mit Dimethyladipat und/oder Dimethylterephthalat zu den entsprechenden methylestergruppenhaltigen amorphen und/oder semikristallinen Copolyestern umgesetzt wird.

## Claims

1. Cross-linker for carboxyl and/or anhydride functional and isocyanate containing compounds in powder lacquers, solvent containing and water dilutable lacquers, **characterised in that** the cross-linker is a β-hydroxylalkyl amide group containing amorphous and/or semi-crystalline copolyester according to Formula (I): 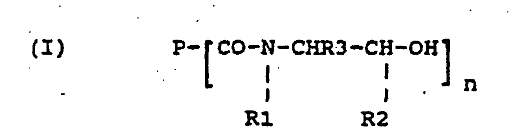 where
P = polymer chain of the polyester
R1 = alkyl residues with 1-5 C-atoms or hydrogen or 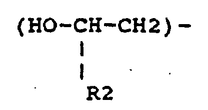
where
R2 = alkyl residues with 1-5 C-atoms or hydrogen,
R3 = alkyl residues and 1-5 C-atoms or hydrogen, and
n = ≥2
with a molecular weight (Mn) of between 300 and 15,000 and a hydroxyl value between 10 and 400 [mg KOH/g].

2. Method of manufacturing the cross-linker according to Claim 1, **characterised in that** in a first stage a hydroxyl functional amorphous and/or semi-crystalline copolyester is reacted with a dialkylester of a polycarboxylic acid in the presence of a transesterification catalyst into an alkylester group containing amorphous and/or semi-crystalline copolyester, and in a second stage the alkylester group containing amorphous and/or semi-crystalline copolyester is reacted with an amino alcohol into corresponding β-hydroxyalkyl amide group containing amorphous and/or semi-crystalline copolyesters.

3. Method according to Claim 2, **characterised in that** the hydroxyl value of the amorphous hydroxyl functional copolyester lies between 10 and 200 [mg KOH/g] and the glass reaction temperature equals > 10°C.

4. Method according to Claim 2, **characterised in that** the hydroxyl value of the semi-crystalline hydroxyl functional copolyester lies between 10 and 400 [mg KOH/g].

5. Method according to Claim 2, **characterised in that** the aminoalcohols are selected from group 2-aminoethanol, 2-methylaminoethanol, 2-ethylaminoethanol, 2-n-propylaminoethanol, 2,2'-iminodiethanol, 2-aminopropanol, 2,2'-iminodiisopropanol, 2-aminocyclohexanol, 2-aminocyclopentanol, 2-aminomethyl 2-methylethanol 2-n-butylaminoethanol, 2-methylamino-1,2-dimethylethanol, 2-amino-2-methyl-1-propanol, 2-amino-2-methyl-1,3-propandiol, 2-amino-2-ethyl-1,3-propandiol, 2-amino-2-hydroxymethyl-1,3-propandiol and 1-amino-2-propanol.

6. Method according to Claim 2, **characterised in that** reaction is performed of the alkylester group containing amorphous and/or semi-crystalline copolyester with an amino alcohol in the presence of catalysts selected from the group sodium- or kalium methylate, kalium tertiary butylate, quaternary ammonium alcoholates, alkali metals, alkali hydroxide, or ammonium hydroxide.

7. Method according to Claim 2, **characterised in that** the hydroxyl functional amorphous and/or semi-crystalline copolyesters are reacted with dimethaladipate and/or dimethylterephthalate to corresponding methylester group containing amorphous and/or semicrystalline copolyesters.

## Revendications

1. Agent de réticulation pour composés à fonction carboxy et/ou anhydride et contenant des groupes isocyanate dans des peintures en poudre, des peintures contenant des solvants et diluables à l'eau, **caractérisé en ce que** l'agent de réticulation est un copolyester amorphe et/ou semi-cristallin contenant des groupes β-hydroxyalkylamide, de formule (I) 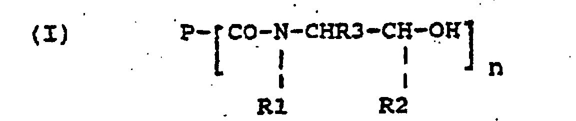 dans laquelle
P est la chaîne polymère du polyester
R1 est un reste alkyle ayant de 1 à 5 atomes de carbone ou l'atome d'hydrogène ou 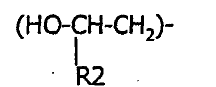
R2 est un reste alkyle ayant de 1 à 5 atomes de carbone ou l'atome d'hydrogène,
R3 est un reste alkyle ayant de 1 à 5 atomes de carbone ou l'atome d'hydrogène, et
n ≥2
ayant une masse moléculaire (Mn) de 300 à 15 000 et un indice hydroxy de 10 à 400 [mg de KOH/g].

2. Procédé pour la préparation des agents de réticulation selon la revendication 1, **caractérisé en ce que** dans une première étape on fait réagir un copolyester amorphe et/ou semi-cristallin à fonction hydroxy avec un diester alkylique d'un acide polycarboxylique en présence d'un catalyseur de trans-estérification, pour obtenir un copolyester amorphe et/ou semi-cristallin contenant des groupes ester alkylique et dans une seconde étape on fait réagir le copolyester amorphe et/ou semi-cristallin contenant des groupes ester alkylique avec un aminoalcool pour aboutir aux copolyesters amorphes et/ou semi-cristallins correspondants, contenant des groupes β-hydroxyalkylamide.

3. Procédé selon la revendication 2, **caractérisé en ce que** l'indice hydroxy des copolyesters amorphes à fonction hydroxy est compris entre 10 et 200 [mg de KOH/g] et la température de transition vitreuse est > 10°C.

4. Procédé selon la revendication 2, **caractérisé en ce que** l'indice hydroxy des copolyesters semi-cristallins à fonction hydroxy est compris entre 10 et 400 [mg de KOH/g].

5. Procédé selon la revendication 2, **caractérisé en ce que** les aminoalcools sont choisis dans le groupe constitué par le 2-aminoéthanol, le 2-méthylaminoéthanol, le 2-éthylaminoéthanol, le 2-n-propylaminoéthanol, le 2,2'-iminodiéthanol, le 2-aminopropanol, le 2,2'-iminodiisopropanol, le 2-aminocyclohexanol, le 2-aminocyclopentanol, le 2-aminométhyl-2-méthyléthanol, le 2-n-butylaminoéthanol, le 2-méthylamino-1,2-diméthyléthanol, le 2-amino-2-méthyl-1-propanol, le 2-amino-2-méthyl-1,3-propanediol, le 2-amino-2-éthyl-1,3-propanediol, le 2-am'ino-2-hydroxyméthyl-1,3-propanediol et le 1-amino-2-propanol.

6. Procédé selon la revendication 2, **caractérisé en ce que** la réaction des copolyesters amorphes et/ou semi-cristallins, contenant des groupes ester alkylique, avec un aminoalcool, s'effectue en présence de catalyseurs choisis dans le groupe constitué par le méthylate de sodium ou de potassium, le tert-butylate de potassium, des alcoolates d'ammonium quaternaire, des métaux alcalins, des hydroxydes de métaux alcalins ou des hydroxydes d'ammonium.

7. Procédé selon la revendication 2, **caractérisé en ce qu'**on fait réagir les copolyesters amorphes et/ou semi-cristallins à fonction hydroxy avec de l'adipate de diméthyle et/ou du téréphtalate de diméthyle, pour aboutir aux copolyesters amorphes et/ou semi-cristallins correspondants, contenant des groupes ester méthylique.
